# EUROPÄISCHE PATENTSCHRIFT

(11) **EP 1 188 758 B1**
(45) Veröffentlichungstag und Bekanntmachung des Hinweises auf die Patenterteilung: **22.12.2004**
(21) Anmeldenummer: 01121312.1
(22) Anmeldetag: 06.09.2001
(51) Int. Cl.: C07F 7/18

(54) **Verfahren zur Herstellung von gelbem Bis(3-[triethoxysilyl]-propyl)polysulfan**
Process for preparing yellow bis(3-[triethoxysilyl]-propyl)polysulfane
Procédé de préparation de bis(3-[triethoxysilyl]-propyl)polysulfane jaune

(30) Priorität: 13.09.2000 DE 10045269
(43) Veröffentlichungstag der Anmeldung: 20.03.2002
(73) Patentinhaber: Degussa AG, 40474 Düsseldorf (DE)
(72) Erfinder: Krafczyk, Roland, Dr., 79618 Rheinfelden (DE); Deschler, Ulrich, Dr., 63877 Sailauf (DE); Michel, Rudolf, 63579 Freigericht (DE); Batz-Sohn, Christoph, Dr., 63454 Hanau-Mittelbuchen (DE)

(56) Entgegenhaltungen:
- EP-A- 0 908 463
- EP-A- 0 963 995
- EP-A- 1 153 927
- US-A- 5 405 985
- US-A- 5 468 893
- US-A- 5 965 760

## Beschreibung

Die Erfindung betrifft die Herstellung von gelbem Bis(3-[triethoxysilyl]propyl)polysulfan.

Bis(3-[triethoxysilyl]propyl)disulfan lässt sich durch Umsetzung von Chlorpropyltriethoxysilan mit Natriumsulfid (Na₂S) und Schwefel herstellen. Das verwendete Chlorpropyltriethoxysilan kann durch Ethanolyse von Chlorpropyltrichlorsilan hergestellt werden. Dabei wird, wie aus DE 20 61 189 und DE 32 36 628 bekannt ist, ein vollständig umgesetztes Produkt mit einem nur sehr geringen Anteil an Chlorpropylmonochlordiethoxysilan erhalten. Dieses vollständig umgesetzte Chlorpropyltriethoxysilan wird im folgenden "neutral" genannt.

Wird das neutrale Chlorpropyltriethoxysilan mit Natriumsulfid (Na₂S) und Schwefel zu Bis(3-[triethoxysilyl]propyl)disulfan umgesetzt, so wird ein dunkelgelb bis rot gefärbtes Produkt (Iodfarbzahl ≥ 20 mg Iod/100 ml) erhalten. Am Markt eingeführt ist jedoch ein hellgelbes Produkt, das aus neutralem Chlorpropyltriethoxysilan nicht zugänglich ist. Um hellgelbes Bis(3-[triethoxysilyl]propyl)disulfan (Iodfarbzahl ≤ 10 mg Iod/100 ml) zu erhalten, muß im Chlorpropyltriethoxysilan ein sogenannter Restsäuregehalt in Form von Chlorpropylmonochlordiethoxysilan vorhanden sein. Dies kann dadurch erreicht werden, daß die Ethanolysereaktion nicht vollständig zu Ende geführt wird. Diese Maßnahme bedingt in der betrieblichen Praxis jedoch einen nicht unerheblichen Mehraufwand, insbesondere deshalb, weil der Restsäuregehalt in einem sehr engen Bereich gehalten werden muß, die Reaktion also sehr gezielt an einem bestimmten Punkt kurz vor vollständigem Umsatz abgebrochen werden muß.

Auch eine Ansäuerung des neutralen Chlorpropyltriethoxysilans mit alkoholischer Salzsäure vor der Reaktion mit den genannten Schwefelungsagentien führt nicht zu hellgelb gefärbtem Bis(3-[triethoxysilyl]propyl)disulfan, sondern ebenfalls zu dunkelgelb bis rot gefärbtem.

Aus EP 0 963 995 ist ein Verfahren zur Herstellung von kurzkettigen Polysulfidsilanen bekannt, wobei getrocknetes Sulfid mit Schwefel in einem polaren Lösungsmittel und anschließend mit Halogenpropyltrialkoxysilan umgesetzt wird.

Aus EP 0963 995 ist ein Verfahren zur Herstellung von kurzkettigen Polysulfidsilanen aus M₂S oder NS mit M = Alkalimetall, Ammonium und N = Erdalkalimetall, Zink, Schwefel und Halogenpropyltrialkoxysilan bekannt.

Ferner ist aus DE 100 34 493 ein Verfahren zur Herstellung von Organosilylalkylpolysulfanen durch Reduzierung der Schwefelkettenlänge mit M₂S und Organosilylalkylhalogenid bekannt. Das Organosilylalkylpolysulfan mit der ursprünglichen, langen Schwefelkette kann auch direkt bei seiner Entstehung aus Organosilylalkylhalogenid und M₂S_{y} mit dem M₂S und dem Organosilylalkylhalogenid umgesetzt werden.

Der Nachteil dieser bekannten Verfahren besteht darin, daß ein Produkt mit dunkelgelber bis roter Farbe erhalten wird.

Aus DE 10024037 ist ein Verfahren zur Herstellung von hellgelbem Bis(3-[triethoxysilyl]propyl)tetrasulfan bekannt, wobei man zu neutralem Chlorpropyltriethoxysilan Chlorpropyltrichlorsilan gibt und anschließend mit Natriumpolysulfid oder Na₂S und Schwefel in Ethanol umsetzt.

Aufgabe der Erfindung ist es, ein alternatives Verfahren bereitzustellen, mit dessen Hilfe man ein gelbes Bis(3-[triethoxysilyl]propyl)polysulfan erhält.

Gegenstand der Erfindung ist ein Verfahren zur Herstellung von gelbem Bis(3-[triethoxysilyl]propyl)polysulfan mit einer mittleren Schwefelkettenlänge kleiner 3,1, bevorzugt kleiner 2,5, und einer

Iodfarbzahl von < 10 mg Iod/100 ml, vorzugsweise 5-7 mg Iod/100 ml, welches dadurch gekennzeichnet ist, daß man neutrales Chlorpropyltriethoxysilan mit Chlorpropyltrichlorsilan vermischt und anschließend mit Natriumsulfid (Na₂S) und Schwefel, Dinatriumtetrasulfid (Na₂S₄) und Na₂S oder Dinatriumtrisulfid (Na₂S₃) und Na₂S in Ethanol umsetzt. Das Dinatriumtrisulfid (Na₂S₃) kann ein 1:1-Gemisch aus Na₂S₂ und Na₂S₄ sein.

Das Bis(3-[triethoxysilyl]propyl)polysulfan kann ein Polysulfangemisch sein.

In einer bevorzugten Ausführungsform kann das Bis(3-[triethoxysilyl]propylsulfan ein Bis(3-[triethoxysilyl]propyl)disulfan oder Bis(3-[triethoxysilyl] propyl)trisulfan sein.

Dieses Verfahren hat den Vorteil, daß die Ethanolysereaktion nicht gezielt an einem bestimmten Punkt kurz vor vollständigem Umsatz abgebrochen werden muß, sondern bis zur vollständigen Umsetzung zu neutralem Chlorpropyltriethoxysilan durchgeführt werden kann. Die für die Herstellung von hellgelbem Bis(3-[triethoxysilyl]propyl)polysulfan erforderliche kleine Menge an Chlorpropylmonochlordiethoxysilan kann einfach durch Zugabe von Chlorpropyltrichlorsilan zu neutralem Chlorpropyltriethoxysilan erreicht werden.

Man kann Chlorpropyltrichlorsilan zu einer Lösung aus neutralem Chlorpropyltriethoxysilan und Ethanol geben oder Chlorpropyltrichlorsilan zu neutralem Chlorpropyltriethoxysilan geben und danach Ethanol zugeben.

Chlorpropyltrichlorsilan kann in Mengen von 0,1 - 20 Gew.-%, vorzugsweise 0,5 - 5 Gew.-%, besonders bevorzugt 0,8 - 1,2 Gew.-% zugegeben werden. Das Verhältnis von Chlorpropyltriethoxysilan: Na₂S: S oder Natriumpolysulfid bestimmt die Schwefelkettenlänge in Bis(3-[triethoxysilyl]propyl)polysulfan.

Die Reaktionsmischung kann vor Zugabe von Natriumpolysulfid und Na₂S oder Na₂S und Schwefel erwärmt werden, vorzugsweise auf Temperaturen von 20 - 90 °C.

Bis(3-[triethoxysilyl]propyl)polysulfan, hergestellt nach dem erfindungsgemäßen Verfahren, hat eine Iodfarbzahl von ≤ 10 mg Iod/100 ml.

### Beispiele

### Beispiel 1:

Bei Raumtemperatur werden zu einer Lösung aus 481,6 g Chlorpropyltriethoxysilan (neutral) in 480 ml Ethanol 4,8 g Chlorpropyltrichlorsilan getropft. Anschließend wird 1 h lang bei 82 °C unter Rühren am Rückfluß gekocht. Nach Abkühlen auf 60 °C werden 33,7 g Schwefel und 89,7 g Natriumsulfid (Na₂S) zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 441,8 g hellgelbes Bis(3-[triethoxysilyl]propyl)disulfan mit einer Iodfarbzahl von 5-7 mg Iod/100 ml, dessen Identität mittels ¹H-NMR-Spektroskopie bestätigt wird.

### Beispiel 2:

Bei Raumtemperatur werden zu 240,8 g Chlorpropyltriethoxysilan (neutral) 2,4 g Chlorpropyltrichlorsilan getropft. Anschließend wird 1 h lang bei 80 °C gerührt. Nach Zugabe von 240 ml Ethanol, die Temperatur fällt auf 60 °C ab, werden 18,4 g Schwefel und 44,8 g Natriumsulfid (Na₂S) zugegeben und das Reaktionsgemisch 1,5 h lang bei 81 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 210,4 g hellgelbes Bis(3-[triethoxysilyl]propyl)disulfan mit einer Iodfarbzahl von 7-10 mg Iod/100 ml, dessen Identität mittels ¹H-NMR-Spektroskopie bestätigt wird.

### Beispiel 3:

Bei Raumtemperatur werden zu einer Lösung aus 180,6 g Chlorpropyltriethoxysilan (neutral) in 180 ml Ethanol 1,8 g Chlorpropyltrichlorsilan getropft. Anschließend wird 30 min. lang bei 82 °C unter Rühren am Rückfluß gekocht. Nach Abkühlen auf 60 °C werden 21,8 g Dinatriumtetrasulfid (Na₂S₄) und 19,5 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 163,2 g hellgelbes Bis(3-[triethoxysilyl]propyl)disulfan mit einer Iodfarbzahl von 5-7 mg Iod/100 ml, dessen Identität mittels ¹H-NMR-Spektroskopie bestätigt wird.

### Beispiel 4:

Bei Raumtemperatur werden zu einer Lösung aus 126,4 g Chlorpropyltriethoxysilan (neutral) in 120 ml Ethanol 1,2 g Chlorpropyltrichlorsilan getropft. Anschließend wird 30 min. lang bei 82 °C unter Rühren am Rückfluß gekocht. Nach Abkühlen auf 60 °C werden 17,8 g Dinatriumtrisulfid (Na₂S₃) und 10,7 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 122,0 g hellgelbes Bis(3-[triethoxysilyl]propyl)disulfan mit einer Iodfarbzahl von 5-7 mg Iod/100 ml, dessen Identität mittels ¹H-NMR-Spektroskopie bestätigt wird.

### Beispiel 5 (Vergleichsbeispiel 1):

Bei Raumtemperatur werden zu einer Lösung von 481,6 g Chlorpropyltriethoxysilan (neutral) in 480 ml Ethanol 33,7 g Schwefel und 89,7 g Natriumsulfid (Na₂S) zugegeben. Die Temperatur des Reaktionsgemisches steigt auf 60 °C an. Das Reaktionsgemisch wird 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 440,2 g rotes Bis(3-[triethoxysilyl]propyl)disulfan mit einer Iodfarbzahl von ≥ 20 mg Iod/100 ml, dessen Identität mittels ¹H-NMR-Spektroskopie bestätigt wird.

### Beispiel 6 (Vergleichsbeispiel 2):

Bei Raumtemperatur werden zu einer Lösung aus 180,6 g Chlorpropyltriethoxysilan (neutral) in 180 ml Ethanol 21,8 g Dinatriumtetrasulfid (Na₂S₄) und 19,5 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 161,5 g rotes Bis(3-[triethoxysilyl]propyl)disulfan mit einer Iodfarbzahl von ≥ 20 mg Iod/100 ml, dessen Identität mittels ¹H-NMR-Spektroskopie bestätigt wird.

### Beispiel 7 (Vergleichsbeispiel 3):

Bei Raumtemperatur werden zu einer Lösung aus 126,4 g Chlorpropyltriethoxysilan (neutral) in 120 ml Ethanol 17,8 g Dinatriumtrisulfid (Na₂S₃) und 10,7 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 121,1 g rotes Bis(3-[triethoxysilyl]propyl)disulfan mit einer Iodfarbzahl von ≥ 20 mg Iod/100 ml, dessen Identität mittels ¹H-NMR-Spektroskopie bestätigt wird.

### Beispiel 8

Bei Raumtemperatur werden zu einer Lösung aus 481,7 g Chlorpropyltriethoxysilan (neutral) in 480 ml Ethanol 4,8 g Chlorpropyltrichlorsilan getropft. Anschließend wird 1 h lang bei 82 °C unter Rühren am Rückfluß gekocht. Nach Abkühlen auf 60 °C werden 50,5 g Schwefel und 89,7 g Natriumsulfid (Na₂S) zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 492,4 g hellgelbes Bis(3-[triethoxysilyl]propyl)polysulfan mit einer mittleren Schwefelkettenlänge von 2,5 und einer Iodfarbzahl von 5-7 mg Iod/100 ml, dessen Identität mittels ¹H-NMR-Spektroskopie bestätigt wird.

### Beispiel 9

Bei Raumtemperatur werden zu einer Lösung aus 481,7 g Chlorpropyltriethoxysilan (neutral) in 480 ml Ethanol 4,8 g Chlorpropyltrichlorsilan getropft. Anschließend wird 1 h lang bei 82 °C unter Rühren am Rückfluß gekocht. Nach Abkühlen auf 60 °C werden 92,2 g Schwefel und 89,7 g Natriumsulfid (Na₂S) zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 478,8 g hellgelbes Bis(3-[triethoxysilyl]propyl)polysulfan mit einer mittleren Schwefelkettenlänge von 3,5 und einer Iodfarbzahl von 5-7 mg Iod/100 ml, dessen Identität mittels ¹H-NMR-Spektroskopie bestätigt wird.

### Beispiel 10

Bei Raumtemperatur werden zu einer Lösung aus 240,8 g Chlorpropyltriethoxysilan (neutral) in 180 ml Ethanol 2,4 g Chlorpropyltrichlorsilan getropft. Anschließend wird 0,5 h lang bei 82 °C unter Rühren am Rückfluß gekocht. Nach Abkühlen auf 60 °C werden 44,0 g Dinatriumpolysulfid (Na₂S_{3,8}) und 20,5 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 232,6 g hellgelbes Bis(3-[triethoxysilyl]propyl)polysulfan mit einer mittleren Schwefelkettenlänge von 2,3 und einer Iodfarbzahl von 5-7 mg Iod/100 ml, dessen Identität mittels ¹H-NMR-Spektroskopie bestätigt wird.

Die Iodfarbzahl wird nach DIN 6162 bestimmt.
Die mittlere Schwefelkettenlänge wird durch Integration der verschiedenen CH₂-Sₓ-Peaks im ¹H-NMR-Spektrum bestimmt.

## Patentansprüche

1. Verfahren zur Herstellung von gelbem Bis(3-[triethoxysilyl]propyl)polysulfan mit einer mittleren Schwefelkettenlänge kleiner 3,1 und einer Iodfarbzahl von ≤ 10 mg Iod/100 ml, **dadurch gekennzeichnet, daß** man neutrales Chlorpropyltriethoxysilan mit Chlorpropyltrichlorsilan vermischt und anschließend mit Natriumsulfid (Na₂S) und Schwefel, Dinatriumtetrasulfid (Na₂S₄) und Na₂S oder Dinatriumtrisulfid (Na₂S₃) und Na₂S in Ethanol umsetzt.

2. Verfahren nach Anspruch 1, **dadurch gekennzeichnet, daß** man Chlorpropyltrichlorsilan in einer Menge von 0,1 - 20 Gew.-% zugibt.

3. Verfahren nach Anspruch 1, **dadurch gekennzeichnet, daß** man die Reaktionsmischung vor Zugabe von Natriumsulfid (Na₂S) und Schwefel oder Natriumpolysulfid und Na₂S auf 20 - 90 °C erwärmt.

4. Verfahren nach Anspruch 1, **dadurch gekennzeichnet, daß** Bis(3-[triethoxysilyl]propyl)polysulfan ein Polysulfangemisch ist.

5. Verfahren nach Anspruch 1, **dadurch gekennzeichnet, daß** das Bis(3-[triethoxysilyl]propyl)polysulfan ein Bis(3-[triethoxysilyl]propyl)disulfan oder Bis(3-[triethoxysilyl]propyl)trisulfan ist.

## Claims

1. Process for the production of yellow bis(3-[triethoxysilyl]propyl)polysulfane with an average sulfur chain length of less than 3.1 and an iodine colour value of ≤ 10 mg iodine/100 ml, **characterised in that** neutral chloropropyltriethoxysilane is mixed with chloropropyltrichlorosilane and then reacted with sodium sulfide (Na₂S) and sulfur, disodium tetrasulfide (Na₂S₄) and Na₂S or disodium trisulfide (Na₂S₃) and Na₂S in ethanol.

2. Process according to claim 1, **characterised in that** chloropropyltrichlorosilane is added in a quantity of 0.1 - 20 wt.%.

3. Process according to claim 1, **characterised in that** the reaction mixture is heated to 20 - 90°C before the addition of sodium sulfide (Na₂S) and sulfur or sodium polysulfide and Na₂S.

4. Process according to claim 1, **characterised in that** bis(3-[triethoxysilyl]propyl)polysulfane is a polysulfane mixture.

5. Process according to claim 1, **characterised in that** the bis(3-[triethoxysilyl]propyl)polysulfane is a bis(3-[triethoxysilyl]propyl)disulfane or bis(3-[triethoxysilyl]propyl)trisulfane.

## Revendications

1. Procédé de préparation de bis(3-[triéthoxysilyl]propyl]polysulfane avec une longueur moyenne de chaîne soufrée inférieure à 3,1 et un indice de coloration ≤10 mg d'iode/100 ml,
**caractérisé en ce qu'**
on mélange du chloropropyltriéthoxysilane avec du chloropropyltrichlorosilane puis avec du sulfure de sodium (Na₂S₄) et du soufre, du tétrasulfure disodique (Na₂S₄) et Na₂S, ou du trisulfure disodique (Na₂S₃) et Na₂S dans l'éthanol.

2. Procédé selon la revendication 1,
**caractérisé en ce qu'**
on ajoute le chloropropyltrichlorosilane en une quantité de 0,1 à 20 % en poids.

3. Procédé selon la revendication 1,
**caractérisé en ce qu'**
on chauffe le mélange réactionnel à 20 à 90°C avant l'addition de sulfure de sodium (Na₂S) et du soufre ou du polysulfure de sodium et du Na₂S.

4. Procédé selon la revendication 1,
**caractérisé en ce que**
le bis(3-[triéthoxysilul]propyl)polysulfane est un mélange de polysulfanes.

5. Procédé selon la revendication 1,
**caractérisé en ce que**
le bis(3-[triéthoxysilyl]propyl)polysulfane est un bis(3-[triéthoxysilyl]propyl)disulfane ou un bis(3-[triéthoxysilyl]propyl)trisulfane.
